(19) Europäisches Patentamt
European Patent Office
Office européen des brevets

(11) **EP 1 483 563 B1**

(12) **EUROPÄISCHE PATENTSCHRIFT**

(45) Veröffentlichungstag und Bekanntmachung des Hinweises auf die Patenterteilung:
**30.12.2015 Patentblatt 2015/53**

(21) Anmeldenummer: **03702264.7**

(22) Anmeldetag: **21.02.2003**

(51) Int Cl.:
*G01N 3/02* (2006.01)  *F03B 3/04* (2006.01)

(86) Internationale Anmeldenummer:
**PCT/CH2003/000135**

(87) Internationale Veröffentlichungsnummer:
**WO 2003/076908 (18.09.2003 Gazette 2003/38)**

(54) **VERFAHREN ZUR BESTIMMUNG DES ELASTO-PLASTISCHEN VERHALTENS VON AUS ANISOTROPEM MATERIAL BESTEHENDEN BAUTEILEN, SOWIE ANWENDUNG DES VERFAHRENS**

METHOD FOR DETERMINING THE ELASTO-PLASTIC BEHAVIOR OF PARTS MADE OF AN ANISOTROPIC MATERIAL, AND USE OF SAID METHOD

PROCEDE PERMETTANT DE DETERMINER LE COMPORTEMENT ELASTOPLASTIQUE DE COMPOSANTS EN MATIERE ANISOTROPE ET UTILISATION DE CE PROCEDE

(84) Benannte Vertragsstaaten:
**DE GB NL**

(30) Priorität: **08.03.2002 CH 402022002**

(43) Veröffentlichungstag der Anmeldung:
**08.12.2004 Patentblatt 2004/50**

(73) Patentinhaber: **ALSTOM Technology Ltd**
**5400 Baden (CH)**

(72) Erfinder:
• **BERNHARDI, Otto Prof.Dr.**
**76669 Bad Schönborn (DE)**
• **MÜCKE, Roland Dr.**
**CH-5210 Windisch (CH)**

(74) Vertreter: **General Electric Technology GmbH**
**CHTI Intellectual Property**
**Brown Boveri Strasse 7**
**5400 Baden (CH)**

(56) Entgegenhaltungen:
**DE-A- 10 118 542   US-A- 5 736 645**

• **IEE PROC.-SCI. MEAS. TECHNOL., [Online] Bd. 147, Nr. 5, 16. Dezember 1999 (1999-12-16) - September 2000 (2000-09), Seiten 229-236, XP002201545 Gefunden im Internet: <URL:http://ieeexplore.ieee.org/Xref/DynWe l.jsp> [gefunden am 2002-06-07]**

• **DATABASE COMPENDEX [Online] ENGINEERING INFORMATION, INC., NEW YORK, NY, US; EKH MAGNUS: "Modeling of inelastic response of metals with emphasis on cyclic viscoplasticity" Database accession no. E2000365258675 XP002201546 & DOKTORSAVH CHALMERS TEK HOGSK; DOKTORSAVHANDLINGAR VID CHALMERS TEKNISKA HOGSKOLA 2000 CHALMERS TEKNISKA HOGSKOLA, GOTEBORG, SWEDEN, Nr. 1572, 2000, Seiten 1-16,**

• **DATABASE COMPENDEX [Online] ENGINEERING INFORMATION, INC., NEW YORK, NY, US; CELIGOJ C C: "Finite deformation coupled thermomechanical problems and 'generalized standard materials'" Database accession no. EIX98394311451 XP002201548 & INT J NUMER METHODS ENG;INTERNATIONAL JOURNAL FOR NUMERICAL METHODS IN ENGINEERING JUL 30 1998 JOHN WILEY & SONS LTD, CHICHESTER, ENGL, Bd. 42, Nr. 6, 30. Juli 1998 (1998-07-30), Seiten 1025-1043,**

**(Forts. nächste Seite)**

- DATABASE INSPEC [Online] THE INSTITUTION OF ELECTRICAL ENGINEERS, STEVENAGE, GB; VAZ M JR, OWEN D R J: "Aspects of ductile fracture and adaptive mesh refinement in damaged elasto-plastic materials" Database accession no. 6883773 XP002201551 & VAZ, M JR AND OWEN, D R J: "Aspects of ductile fracture and adaptive mesh refinement in damaged elasto-plastic materials" INT. J. NUMER. METHODS ENG. (UK), Bd. 50, Nr. 1, 10. Januar 2001 (2001-01-10), Seiten 29-54,
- RAMBERG W ET AL: "DESCRIPTION OF STRESS-STRAIN CURVES BY THREE PARAMETERS" NACA RESEARCH MEMORANDUM, XX, XX, Nr. 902, Juli 1943 (1943-07), Seiten 1-28, XP008004433
- ALWAR R S ET AL: "inelastic strain concentration in directionally solidified materials", 19950101, vol. 19, no. 3, 1 January 1995 (1995-01-01), pages 331-346, XP008027252,

**Beschreibung**

**TECHNISCHES GEBIET**

Die vorliegende Erfindung bezieht sich auf das Gebiet der Analyse und Vorhersage des Verhaltens vom mechanischen Bauteilen. Sie betrifft ein Verfahren zur Bestimmung des elasto-plastischen Verhaltens von Bauteilen gemäss dem Oberbegriff des Anspruchs 1.

**STAND DER TECHNIK**

Die Bauteile in Gasturbinen (Laufschaufeln, Leitschaufeln, Liner etc.) werden in der Regel so hoch beansprucht, dass sie nur eine endliche Lebensdauer aufweisen. Die Vorhersage dieser Lebensdauer ist für eine sichere und wirtschaftliche Auslegung von Gasturbinen notwendig.

Die Belastung der Bauteile setzt sich zusammen aus Kräften, hohen thermischen Lasten, Oxidation und Korrosion. Die mechanische und thermische Belastung führt in vielen Fällen bereits nach wenigen tausend Lastzyklen zum Ermüden der Bauteile. Diese niederzyklische Ermüdung wird im isothermen Fall durch LCF-Versuche (LCF = Low Cycle Fatigue) und im anisothermen Fall durch TMF-Versuche (TMF = Thermal Mechanical Fatigue) wiedergegeben.

In der Auslegungsphase der Gasturbine werden die durch die Belastung verursachten Spannungen ermittelt. Die Komplexität der Geometrie und/oder Belastung erfordert den Einsatz der Methode der Finiten Elemente (FE) zur Ermittlung der Spannungen. Da aber oft notwendige inelastische Berechnungen in der Regel aus Kosten- und Zeitgründen nicht möglich sind, basiert die Lebensdauervorhersage fast ausschliesslich auf linear-elastischen Spannungen. Meist stehen nur isotherme Daten (dehnungskontrollierte LCF-Versuche) zur Verfügung, weshalb auch anisotherme Zyklen mit LCF-Daten bewerten werden müssen.

Als Mass für die Schädigung (Schädigungsgesetz) wird dabei die Amplitude der totalen Vergleichsdehnung $\varepsilon_{v,ep}$ verwendet. Soll die erforderliche Zyklenzahl $N_{req}$ im Bauteil erreicht werden, so muss an jedem Ort des Bauteils die Amplitude der totalen Vergleichsdehnung $\varepsilon_{v,ep}$ der Beziehung

$$\text{(a)} \qquad \varepsilon_{v,ep} \leq \varepsilon_a^M (T_{dam}, N_{req})$$

genügen. Bei $\varepsilon_a^M$ handelt es sich um die zulässige totale Dehnungsamplitude, die aus isothermen LCF-Versuchen ermittelt wird. Sie ist für verschiedene Temperaturen und Zyklenzahlen zu bestimmen. Die der Schädigung zugrunde liegende Temperatur $T_{dam}$ muss für einen Zyklus mit veränderlicher Temperatur geeignet gewählt werden.

Falls die massgebende Belastung bei hohen Temperaturen über mehrere Minuten wirkt, ist mit zusätzlicher Schädigung zu rechnen. Um die reduzierte Lebensdauer aufgrund der Schädigungsakkumulation von Kriechermüdung und zyklischer Ermüdung zu erfassen, werden LCF-Daten aus Versuchen mit Haltezeit ermittelt.

Das Schädigungsmass $\varepsilon_{v,ep}$ entspricht der Dehnungsamplitude eines eingespielten Zyklus. Dieser Zyklus wird aus dem linear-elastisch analysierten Zyklus über eine modifizierte Neuber-Regel ermittelt:

$$\text{(b)} \qquad \underline{\sigma}^{*dev} \cdot \underline{\varepsilon}^* (\underline{\sigma}^{*dev}) = \underline{\sigma}_{ep}^{dev} \cdot \underline{\varepsilon}_{ep} (\underline{\sigma}^{dev})$$

wobei

$\underline{\sigma}^{*dev}$ den Vektor des Deviators der linear-elastischen Spannungsamplitude,

$\underline{\varepsilon}^*(\underline{\sigma}^{*dev})$ den Vektor der linear-elastischen Dehnungsamplitude

$\underline{\sigma}_{ep}^{dev}$ den Vektor des Deviators der totalen elastisch-plastischen Spannungsamplitude und

$\underline{\varepsilon}_{ep}(\underline{\sigma}^{dev})$ den Vektor der elastisch-plastischen Dehnungsamplitudedarstellen. Das Schädigungsmass $\varepsilon_{v,ep}$ wird über eine Vergleichshypothese aus dem Vektor der totalen elastisch-plastischen Dehnungsamplitude $\underline{\varepsilon}_{ep}(\underline{\sigma}^{dev})$ bestimmt.

Die für die Ermittlung der totalen elastisch-plastischen Dehnungsamplitude $\underline{\varepsilon}_{ep}(\underline{\sigma}^{dev})$ notwendige zyklische σ-ε-Kurve wird analytisch durch eine modifizierte Ramberg-Osgood-Beziehung dargestellt.

Mit Hilfe der Neuber-Regel können dann die in Gasturbinenkomponenten (Schaufeln, Brennkammern) auftretenden inelastischen Effekte näherungsweise erfasst werden. Diese Effekte müssen bei der Lebensdauervorhersage der Konstruktionen berücksichtigt werden. Bislang ist allerdings nur die Neuber-Regel (b) für Materialien mit isotropen mechanischen Verhalten bekannt.

Da aufgrund ihrer speziellen Eigenschaften im Gasturbinenbau bei den Komponenten, speziell den Turbinenschaufeln, zunehmend (anisotrope) Einkristallmaterialien zur Anwendung kommen, wäre es für die Auslegung der Komponenten - insbesondere hinsichtlich der Bestimmung der Lebensdauer unter zyklischen Belastungen - wünschenswert, eine zum Fall isotroper Materialien analoge Berechnungsmethode zur Verfügung zu haben.

Aus dem Dokument DE 101 18 542 A ist eine modifizierte Neuber-Regel bekannt, welche die ermittelte lineare Spannung benutzt. Im Dokument Alwar, R. S. et al "Inelastic strain concentration in directionally solidified materials", 19950101, Bd. 19, Nr. 3, 1. Januar 1995 (1995-01-01), Seiten 331-346, XP0080272552 wird die Gültigkeit der Neuber Regel im Falle von anisotropen Körpern untersucht.

## DARSTELLUNG DER ERFINDUNG

Es ist daher Aufgabe der Erfindung, ein Verfahren zur näherungsweisen Bestimmung des elasto-plastischen Verhaltens von einkristallinen Materialien bei hohen Temperaturen anzugeben, welches insbesondere zur Bestimmung der Lebensdauer von Komponenten einer Gasturbinenanlage aus einkristallinem Material angewendet werden kann.

Die Aufgabe wird durch die Gesamtheit der Merkmale des Anspruchs 1 gelöst. Der Kern der Erfindung besteht darin, zur Berücksichtigung von anisotropen Eigenschaften der Bauteile, wie sie insbesondere durch Einsatz von einkristallinen Materialien auftreten, eine modifizierte anisotrope Neuber-Regel der Form

$$\underline{\sigma}^{*dev}\,\underline{\varepsilon}^{*}(\underline{\sigma}^{*dev}) = \underline{\sigma}^{*dev}\,\underline{\underline{E}}^{-1}\,\underline{\sigma}^{*dev} = \underline{\sigma}_{ep}^{dev}\,\underline{\underline{E}}^{-1}\,\underline{\sigma}_{ep}^{dev} + \underline{\sigma}_{ep}^{dev}\cdot\frac{\partial\boldsymbol{\sigma}_{v,ep}^{2}}{\partial\underline{\boldsymbol{\sigma}}_{ep}}\cdot\frac{\boldsymbol{\alpha}}{E_{R}}\left(\frac{\boldsymbol{\sigma}_{v,ep}^{2}}{\boldsymbol{\sigma}_{0}^{2}}\right)^{n-1}$$

einzusetzen.

Vorzugsweise werden dabei für die Grössen $\underline{\sigma}^{*dev}$ und $\underline{\sigma}_{ep}^{dev}$ die folgenden Beziehungen

$$\underline{\sigma}^{*dev} = \underline{D}\sqrt{\boldsymbol{\sigma}^{*2}}$$

und

$$\underline{\sigma}_{ep}^{dev} = \underline{D}\,\sqrt{\sigma_{ep}^{2}}$$

benutzt. Dabei ist $\underline{D} = [D_{xx}, D_{yy}, D_{zz}, D_{yz}, D_{zx}, D_{xy}]$ ein Richtungsvektor der Länge 1, $\underline{D}^{T}\underline{D}=1$, der darüber hinaus Deviatoreigenschaften besitzt, $D_{xx} + D_{yy} + D_{zz} = 1$. Weiterhin gelten die Beziehungen $\underline{\sigma}^{*}\cdot\sigma^{*} = \sigma^{*2}$ und $\underline{\sigma}_{ep}\cdot\underline{\sigma}_{ep} = \sigma_{ep}^{2}$ woraus sich die modifizierte Neuber-Regel wird in der Form

$$\sigma^{*2} = \sigma_{ep}^{2}\left(1+\frac{A}{C}\frac{\alpha}{E_{R}}\left(\frac{A\sigma_{ep}^{2}}{\sigma_{0}^{2}}\right)^{n-1}\right)$$

darstellen lässt, mit dem anisotropen inelastischen Korrekturterm

$$A = \frac{1}{2}\left[F(D_{yy}-D_{zz})^{2}+G(D_{zz}-D_{xx})^{2}+H(D_{xx}-D_{yy})^{2}+2LD_{yz}^{2}+2MD_{zx}^{2}+2ND_{xy}^{2}\right]$$

und dem anisotropen elastischen Korrekturterm

$$C = \underline{D}\cdot\underline{\underline{E}}^{-1}\cdot\underline{D}\,,$$

wobei F, G, H, L, M, und N die Hill'schen Parameter sind.

Gemäss einer bevorzugten Ausgestaltung des Verfahrens wird die Gleichung gemäss der modifizierten Neuber-Regel mit einem iterativen Verfahren, insbesondere einer Newton-Iteration, gelöst.

Erfindungsgemäss wird das Verfahrens zur Bestimmung der Lebensdauer von unter zyklischer Belastung stehenden Gasturbinenkomponenten angewendet.

## WEGE ZUR AUSFÜHRUNG DER ERFINDUNG

Das der Erfindung zugrundeliegende Materialmodell wird aus einem plastischen Potential abgeleitet:

$$(1) \qquad \Omega = \frac{\alpha \sigma_0^2}{E_R n} \left( \frac{\sigma_{v,ep}^2}{\sigma_0^2} \right)^n$$

Hierbei sind

-   $E_R$ die 'Referenz'-Steifigkeit. $E_R$ wird mitgeführt, um die formale Ähnlichkeit des Formelwerkes mit dem des bekannten isotropen Falles zu erhalten. $E_R$ wird zweckmäßigerweise in der Größenordnung der elastischen Konstantem des betrachteten Materials gewählt, z.B. ER = 100000 Nmm$^{-2}$,
-   $\Omega$ das plastische Potential des Materiales, aus dem durch Ableitung nach den Spannungen die plastischen Dehnungen berechnet werden,
-   $\sigma_0$ eine 'Referenz'-Spannung die zweckmässigerweise in der Grössenordnung der Fliessgrenze gewählt wird, und
-   $\sigma_{v,ep}$ eine anisotrope Vergleichsspannung (s.u.).

Die plastischen Dehnungen ergeben sich dann zu

$$(2) \qquad \underline{\varepsilon}_{pl} = \frac{\partial \Omega}{\partial \underline{\sigma}_{ep}}$$

Aus dem plastischen Potential $\Omega$ werden also durch partielle Ableitung nach den Spannungen $\sigma_{ep}$ die plastischen Dehnungen $\underline{\varepsilon}_{pl}$ gebildet.

Mit Gl. (1) und (2) wird

$$(3) \qquad \frac{\partial \Omega}{\partial \underline{\sigma}_{ep}} = \frac{\partial \sigma_{v,ep}^2}{\partial \underline{\sigma}_{ep}} \frac{\alpha}{E_R} \left( \frac{\sigma_{v,ep}^2}{\sigma_0^2} \right)^{n-1} .$$

$\sigma_{v,ep}$ ist die (anisotrope) Vergleichsspannung. Im vorliegenden anisotropen Fall kann die Vergleichsspannung nach HILL verwendet werden:

$$(4) \quad \sigma_{v,ep}^2 = \frac{1}{2} \left[ F(\sigma_{yy} - \sigma_{zz})^2 + G(\sigma_{zz} - \sigma_{xx})^2 + H(\sigma_{xx} - \sigma_{yy})^2 + 2L\sigma_{yz}^2 + 2M\sigma_{zx}^2 + 2N\sigma_{xy}^2 \right]$$

Für den allgemeinen Fall eines orthotropen Materiales sind sechs unabhängigen plastischen Materialkonstanten F, G, H sowie L, M, und N (Hillsche Konstanten) zu berücksichtigen. Der Spezialfall mit 1 = F = G = H = 3L = 3M = 3N ergibt die bekannte von-Mises Vergleichsspannung für isotrope Materialien; der Spezialfall mit zwei unabhängigen Parametern F = G = H und L = M = N ergibt die Formulierung für kubische Kristallsymmetrie, die hierfür Einkristallmaterialien (z.B. CMSX-4) interessant ist.

Aus Gl. (3) bekommt man

$$(5) \qquad \underline{\varepsilon}_{pl} = \varepsilon_v \frac{\partial \sigma_{v,ep}^2}{\partial \underline{\sigma}_{ep}}$$

mit dem 'Richtungsvektor'

$$(6) \qquad \frac{\partial \sigma_{v,ep}^2}{\partial \underline{\sigma}_{ep}} = \begin{pmatrix} -G(\sigma_{zz} - \sigma_{xx}) + H(\sigma_{xx} - \sigma_{yy}) \\ F(\sigma_{yy} - \sigma_{zz}) - H(\sigma_{xx} - \sigma_{yy}) \\ -F(\sigma_{yy} - \sigma_{xx}) + G(\sigma_{zz} - \sigma_{xx}) \\ 2N\sigma_{xy} \\ 2M\sigma_{zx} \\ 2L\sigma_{yz} \end{pmatrix}$$

und der 'Vergleichsdehnung'

$$(7) \qquad \varepsilon_v = \frac{\alpha}{E_R} \cdot \left( \frac{\sigma_{v,ep}^2}{\sigma_0^2} \right)^{n-1}$$

Für die hier interessierenden Einkristall-Materialien mit kubischer Symmetrie wird die linear-elastische Materialgleichung

$$(8) \qquad \underline{\underline{E}}^{-1} = \begin{pmatrix} 1/E & -\nu/E & -\nu/E & 0 & 0 & 0 \\ -\nu/E & 1/E & -\nu/E & 0 & 0 & 0 \\ -\nu/E & -\nu/E & 1/E & 0 & 0 & 0 \\ 0 & 0 & 0 & 1/G & 0 & 0 \\ 0 & 0 & 0 & 0 & 1/G & 0 \\ 0 & 0 & 0 & 0 & 0 & 1/G \end{pmatrix}$$

E, G und v sind die drei unabhängigen elastischen Materialkonstanten für kubisch symmetrische (Einkristall-)Materialien.

Das vollständige anisotrope Ramberg-Osgood Materialgesetz ergibt sich als Summe der elastischen und plastischen Dehnungen zu

$$(9) \qquad \underline{\varepsilon}_{ep} = \underline{\underline{E}}^{-1} \cdot \underline{\sigma}_{ep} + \frac{\partial \sigma_{v,ep}^2}{\partial \underline{\sigma}_{ep}} \frac{\alpha}{E_R} \left( \frac{\sigma_{v,ep}^2}{\sigma_0^2} \right)^{n-1}$$

In der hier verwendeten Variante der Neuberregel wird die Formänderungsarbeit der linear elastischen Größen und der elastisch plastischen Größen gleichgesetzt

$$(10) \qquad \underline{\sigma}^{*dev} \cdot \underline{\varepsilon}^*(\underline{\sigma}^{*dev}) = \underline{\sigma}_{ep}^{dev} \cdot \underline{\varepsilon}_{ep}(\underline{\sigma}^{dev})$$

Die elastisch plastische Dehnung $\underline{\varepsilon}_{ep}(\underline{\sigma}^{dev})$ ergibt sich aus der Ramberg-Osgood-Beziehung für deviatorische Grössen

$$(11) \qquad \underline{\varepsilon}_{ep}(\underline{\sigma}_{ep}^{dev}) = \underline{\underline{E}}^{-1} \cdot \underline{\sigma}_{ep}^{dev} + \frac{\partial \sigma_{v,ep}^2}{\partial \underline{\sigma}_{ep}} \frac{\alpha}{E_R} \left( \frac{\sigma_{v,ep}^2}{\sigma_0^2} \right)^{n-1}$$

und die linear elastische Dehnung $\underline{\varepsilon}^*(\underline{\sigma}^{*dev})$ ergibt sich aus dem Hooke'schen Gesetz in der Form

$$(12) \qquad \underline{\varepsilon}^*(\underline{\sigma}^{*dev}) = \underline{\underline{E}}^{-1} \cdot \underline{\sigma}^{*dev}$$

Damit erhält man die anisotrope Neuber Regel

$$(13) \quad \underline{\sigma}^{*dev} \underline{\varepsilon}^*(\underline{\sigma}^{*dev}) = \underline{\sigma}^{*dev} \underline{\underline{E}}^{-1} \underline{\sigma}^{*dev} = \underline{\sigma}_{ep}^{dev} \underline{\underline{E}}^{-1} \underline{\sigma}_{ep}^{dev} + \underline{\sigma}_{ep}^{dev} \cdot \frac{\partial \sigma_{v,ep}^2}{\partial \sigma} \cdot \frac{\alpha}{E_R} \left( \frac{\sigma_{v,ep}^2}{\sigma_0^2} \right)^{n-1}$$

Hier wird die Annahme eingeführt, dass die elastisch plastischen Spannungen proportional zu den elastischen Spannungen (aus der Finite-Elemente-Berechnung) sein sollen. Oder anders gesagt wird angenommen, daß sich die Richtung der Spannung im Spannungsraum nicht ändert, wenn man von den elastischen Spannungen σ* zu den geschätzten inelastischen Spannungen übergeht. Der 'Richtungsvektor' $\underline{D}$ kann bestimmt werden aus

$$(14) \qquad \underline{\sigma}^{*dev} = \underline{D} \sqrt{\sigma^{*2}}$$

Für die inelastischen (geschätzten) Spannungen gilt jetzt mit dem gleichen Richtungsvektor

$$(15) \qquad \underline{\sigma}_{ep}^{dev} = \underline{D} \sqrt{\sigma_{ep}^2}$$

Daraus folgt sofort für die elastischen Spannungen

$$(16) \qquad \underline{\sigma}^{*dev} \underline{\underline{E}}^{-1} \underline{\sigma}^{*dev} = \underline{D} \cdot \underline{\underline{E}}^{-1} \cdot \underline{D} \sigma^{*2} = C \sigma^{*2}$$

und für die inelastischen Spannungen

$$(17) \qquad \underline{\sigma}^{dev} \underline{\underline{E}}^{-1} \underline{\sigma}^{dev} = \underline{D} \cdot \underline{\underline{E}}^{-1} \cdot \underline{D} \sigma^2 = C \sigma^2$$

Für die elasto-plastische Vergleichsspannung gilt

$$(18)$$
$$\sigma_{v,ep}^2 = \frac{1}{2} \left[ F(D_{yy} - D_{zz})^2 + G(D_{zz} - D_{xx})^2 + H(D_{xx} - D_{yy})^2 + 2L D_{yz}^2 + 2M D_{zx}^2 + 2N D_{xy}^2 \right] \sigma_{ep}^2 = A \sigma_{ep}^2$$

Damit kann die Gl. (13) auch in der Form

$$(19) \qquad \sigma^{*2} = \sigma_{ep}^2 \left( 1 + \frac{A}{C} \frac{\alpha}{E_R} \left( \frac{A \sigma_{ep}^2}{\sigma_0^2} \right)^{n-1} \right)$$

dargestellt werden, mit dem anisotropen inelastischen Korrekturterm

$$(20) \qquad A = \frac{1}{2} \left[ F(D_{yy} - D_{zz})^2 + G(D_{zz} - D_{xx})^2 + H(D_{xx} - D_{yy})^2 + 2L D_{yz}^2 + 2M D_{zx}^2 + 2N D_{xy}^2 \right]$$

und dem anisotropen elastischen Korrekturterm

$$(21) \qquad C = \underline{D} \cdot \underline{\underline{E}}^{-1} \cdot \underline{D}$$

Die o.a. Gleichung (19) für $\sigma_{ep}^2$ kann wie im Falle der 'klassischen' Neuber-Regel mit einem iterativen Verfahren (Newton-Iteration) gelöst werden. Ist $\sigma_{ep}^2$ ermittelt, kann mit Hilfe von $\underline{D}$ der elastoplastische Spannungsvektor sofort berechnet werden.

Zur Nachbearbeitung der 'linearen' Resultate der Finite-Elemente-Berechnungen ist es zweckmäßig, die o.a. Prozedur in ein Post -Processing-Programm zu implementieren, welches die 'linearen' Daten für die Dehnungen und Spannungen aus Ergebnisfiles der FE-Programme liest und diese zu den gesuchten inelastischen Ergebnissen weiterverarbeitet. Im Falle der isotropen Neuber-Regel ist dies Stand der Technik. Die Erweiterung auf die hier beschriebene anisotrope Neuber-Regel kann sehr leicht durchgeführt werden, indem die beiden o.a. 'Korrekturfaktoren' in die Iterationsprozedur eingebaut werden.

## Patentansprüche

1. Verfahren zur Bestimmung des elasto-plastischen Verhaltens von Bauteilen, insbesondere von Gasturbinenanlagen, bei hohen Temperaturen, bei welchem Verfahren zunächst das linear-elastische Verhalten bestimmt und auf der Grundlage der linear-elastischen Resultate durch Anwendung der Neuber-Regel das inelastische Verhalten mitberücksichtigt wird, **dadurch gekennzeichnet, dass** zur Berücksichtigung von anisotropen Eigenschaften der Bauteile, wie sie insbesondere durch Einsatz von einkristallinen Materialien auftreten, eine modifizierte anisotrope Neuber-Regel der Form

$$\underline{\sigma}^{*dev}\underline{\varepsilon}^*(\underline{\sigma}^{*dev}) = \underline{\sigma}^{*dev}\underline{\underline{E}}^{-1}\underline{\sigma}^{*dev} = \underline{\sigma}_{ep}^{dev}\underline{\underline{E}}^{-1}\underline{\sigma}_{ep}^{dev} + \underline{\sigma}_{ep}^{dev} \cdot \frac{\partial \sigma_{v,ep}^2}{\partial \underline{\sigma}} \cdot \frac{\alpha}{E_R}\left(\frac{\sigma_{v,ep}^2}{\sigma_0^2}\right)^{n-1}$$

verwendet wird, mit

$\underline{\sigma}^{*dev}$ = Deviator der ermittelten linearen Spannung,
$\underline{\varepsilon}^*(\sigma^{*dev})$ = ermittelte lineare Dehnung,

$\underline{\sigma}_{ep}^{dev}$ = Deviator der abgeschätzten inelastischen Spannung,

$\sigma_{v,ep}$ = Hill'sche elastisch-plastische Vergleichsspannung
$\underline{E}^{-1}$ = inverse Steifigkeitsmatrix
$E_R$ = Referenz-Steifigkeit,
$\sigma_0$ = Bezugsspannung, und
$\alpha$, n = Konstanten.

2. Verfahren nach Anspruch 1, **dadurch gekennzeichnet, dass** für die Grössen $\underline{\sigma}^{*dev}$ und $\underline{\sigma}_{ep}^{dev}$ die folgenden Beziehungen

$$\underline{\sigma}^{*dev} = \underline{D} \cdot \sqrt{\underline{\sigma}^{*2}}$$

und

$$\underline{\sigma}_{ep}^{dev} = \underline{D} \cdot \sqrt{\underline{\sigma}_{ep}^2}$$

angenommen werden, wobei $\underline{D} = [D_{xx}, D_{yy}, D_{zz}, D_{yz}, D_{zx}, D_{xy}]$ ein Richtungsvektor der Länge 1, $\underline{D}^T\underline{D}=1$, ist, der darüber hinaus Deviatoreigenschaften besitzt, $D_{xx} + D_{yy} + D_{zz} = 1$, und dass die modifizierte Neuber-Regel in der Form

$$\sigma^{*2} = \sigma_{ep}^2 \left( 1 + \frac{A}{C} \frac{\alpha}{E_R} \left( \frac{A\sigma_{ep}^2}{\sigma_0^2} \right)^{n-1} \right)$$

verwendet wird, mit dem anisotropen inelastischen Korrekturterm

$$A = \frac{1}{2} \left[ F(D_{yy}-D_{zz})^2 + G(D_{zz}-D_{xx})^2 + H(D_{xx}-D_{yy})^2 + 2LD_{yz}^2 + 2MD_{zx}^2 + 2ND_{xy}^2 \right]$$

und dem anisotropen elastischen Korrekturterm

$$C = \underline{D} \cdot \underline{\underline{E}}^{-1} \cdot \underline{D}$$

und wobei mit F, G, H, L, M und N die Hill'schen Parameter bezeichnet sind.

3. Verfahren nach Anspruch 2, **dadurch gekennzeichnet, dass** die Gleichung gemäss der modifizierten Neuber-Regel mit einem iterativen Verfahren, insbesondere einer Newton-Iteration, gelöst wird.

4. Anwendung des Verfahrens nach einem der Ansprüche 1 bis 3 zur Bestimmung der Lebensdauer von unter zyklischer Belastung stehenden Gasturbinenkomponenten.

**Claims**

1. Method for determining the elasto-plastic behaviour of components, in particular of gas turbine installations, at high temperatures, in which method, first of all, the linear-elastic behaviour is determined and, on the basis of the linear-elastic results, the inelastic behaviour is also taken into account by applying Neuber's rule, **characterized in that**, to take account of anisotropic properties of the components, as occur in particular through the use of single-crystal materials, a modified anisotropic Neuber's rule of the form

$$\underline{\sigma}^{*dev} \underline{\varepsilon}^*(\underline{\sigma}^{*dev}) = \underline{\sigma}^{*dev} \underline{\underline{E}}^{-1} \underline{\sigma}^{*dev} = \underline{\sigma}_{ep}^{dev} \underline{\underline{E}}^{-1} \underline{\sigma}_{ep}^{dev} + \underline{\sigma}_{ep}^{dev} \cdot \frac{\partial \sigma_{v,ep}^2}{\partial \sigma} \cdot \frac{\alpha}{E_R} \left( \frac{\sigma_{v,ep}^2}{\sigma_0^2} \right)^{n-1}$$

is used where

$\underline{\sigma}^{*dev}$ = deviator of the determined linear stress,
$\underline{\varepsilon}^*(\underline{\sigma}^{*dev})$ = determined linear strain,

$\underline{\sigma}_{ep}^{dev}$ = deviator of the estimated inelastic stress,

$\underline{\sigma}_{v,ep}$ = Hill's elastic-plastic comparative stress,
$\underline{\underline{E}}^{-1}$ = inverse stiffness matrix
$E_R$ = reference stiffness,
$\sigma_0$ = reference stress, and

$\alpha$,n = constant.

**2.** Method according to Claim 1, **characterized in that** the following relationships

$$\underline{\sigma}^{*dev} = \underline{D} \cdot \sqrt{\sigma^{*2}}$$

and

$$\underline{\sigma}_{ep}^{dev} = \underline{D} \cdot \sqrt{\sigma_{ep}^2}$$

are assumed for the variables $\underline{\sigma}^{*dev}$ and $\underline{\sigma}_{ep}^{dev}$, where $\underline{D} = [D_{xx}, D_{yy}, D_{zz}, D_{yz}, D_{zx}, D_{xy}]$ is a directional vector of length 1, $\underline{D}^T\underline{D}=1$, which furthermore possesses deviator properties, $D_{xx} + D_{yy} + D_{zz} = 1$, and **in that** the modified Neuber's rule is used in the form

$$\sigma^{*2} = \sigma_{ep}^2 \left( 1 + \frac{A}{C} \frac{\alpha}{E_R} \left( \frac{A\sigma_{ep}^2}{\sigma_0^2} \right)^{n-1} \right)$$

with the anisotropic inelastic correction term

$$A = \frac{1}{2} \left[ F(D_{yy} - D_{zz})^2 + G(D_{zz} - D_{xx})^2 + H(D_{xx} - D_{yy})^2 + 2LD_{yz}^2 + 2MD_{zx}^2 + 2ND_{xy}^2 \right]$$

and the anisotropic elastic correction term

$$C = \underline{D} \cdot \underline{\underline{E}}^{-1} \cdot \underline{D}$$

and where the Hill parameters are denoted by F, G, H, L, M and N.

**3.** Method according to Claim 2, **characterized in that** the equation according to the modified Neuber's rule is solved using an iterative method, in particular a Newton iteration.

**4.** Application of the method according to one of Claims 1 to 3 for determining the service life of gas turbine components which are under cyclic load.

**Revendications**

**1.** Procédé de détermination du comportement élastique-plastique à haute température de composants, en particulier dans des installations de turbines à gaz, dans lequel on détermine d'abord le comportement élastique linéaire et, sur base des résultats élastiques linéaires et en appliquant la règle de Neuber, on tient compte également du comportement inélastique, **caractérisé en ce que** pour tenir compte des propriétés anisotropes des composants qui résultent en particulier de l'utilisation de matériaux monocristallins, on utilise une règle de Neuber anisotrope modifiée qui a la forme :

$$\underline{\sigma}^{*dev}\,\underline{\underline{\varepsilon}}^{*}(\underline{\sigma}^{*dev}) = \underline{\sigma}^{*dev}\,\underline{\underline{E}}^{-1}\,\underline{\sigma}^{*dev} = \underline{\sigma}_{ep}^{dev}\,\underline{\underline{E}}^{-1}\,\underline{\sigma}_{ep}^{dev} + \underline{\sigma}_{ep}^{dev}\cdot\frac{\partial\sigma_{v,ep}^{2}}{\partial\sigma}\cdot\frac{\alpha}{E_{R}}\left(\frac{\sigma_{v,ep}^{2}}{\sigma_{0}^{2}}\right)^{n-1}$$

dans laquelle :

$\underline{\sigma}^{*dev}$ = le déviateur de la tension linéaire déterminée
$\underline{\varepsilon}^{*}(\underline{\sigma}^{*dev})$ = l'allongement linéaire déterminé

$\underline{\sigma}_{ep}^{dev}$ = le déviateur de la contrainte inélastique estimée

$\underline{\sigma}_{v,ep}$ = la tension comparative élastique-plastique de Hill
$\underline{E}^{-1}$ = l'inverse de la matrice de rigidité
$E_{R}$ = la rigidité de référence
$\sigma_{0}$ = la tension de référence et
$\alpha$, n = des constantes.

**2.** Procédé selon la revendication 1, **caractérisé en ce que** pour les grandeurs $\underline{\sigma}^{*dev}$

et $\underline{\sigma}_{ep}^{dev}$

on suppose les équations :

$$\underline{\sigma}^{*dev} = \underline{D}\cdot\sqrt{\sigma^{*2}}$$

et

$$\underline{\sigma}_{ep}^{dev} = \underline{D}\cdot\sqrt{\sigma_{ep}^{2}}$$

dans lesquelles $\underline{D}$ = [$D_{xx}$, $D_{yy}$, $D_{zz}$, $D_{yz}$, $D_{zx}$, $D_{xy}$] est un vecteur d'orientation de longueur 1, $\underline{D}^{T}\underline{D}$=1, qui possède en outre des propriétiés de déviateur, $D_{xx} + D_{yy} + D_{zz} = 1$, et **en ce que** l'on utilise la règle de Neuber modifiée sous la forme :

$$\sigma^{*2} = \sigma_{ep}^{2}\left(1+\frac{A}{C}\frac{\alpha}{E_{R}}\left(\frac{A\sigma_{ep}^{2}}{\sigma_{0}^{2}}\right)^{n-1}\right)$$

avec le terme de correction anisotrope inélastique

$$A = \frac{1}{2}\left[F(D_{yy}-D_{zz})^2 + G(D_{zz}-D_{xx})^2 + H(D_{xx}-D_{yy})^2 + 2LD_{yz}^2 + 2MD_{zx}^2 + 2ND_{xy}^2\right]$$

et le terme de correction anisotrope élastique

$$C = \underline{D} \cdot \underline{\underline{E}}^{-1} \cdot \underline{D}$$

et dans lesquelles les paramètres de Hill sont dénotés par F, G, H, L, M et N.

3. Procédé selon la revendication 2, **caractérisé en ce que** l'équation de la règle de Neuber modifiée est résolue à l'aide d'un procédé itératif et en particulier d'une itération de Newton.

4. Utilisation du procédé selon l'une des revendications 1 à 3 pour déterminer la durée de vie de composants de turbine à gaz exposés à des sollicitations cycliques.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10118542 A

**In der Beschreibung aufgeführte Nicht-Patentliteratur**

- **ALWAR, R. S. et al.** *Inelastic strain concentration in directionally solidified materials,* 01. Januar 1995, vol. 19 (3), 331-346